# EUROPEAN PATENT APPLICATION

(11) **EP 4 458 475 A1**
(43) Date of publication of application: **06.11.2024**
(21) Application number: 22916168.2
(22) Date of filing: 28.12.2022
(51) Int. Cl.: B03C 3/64, B03C 3/40, B03C 3/41, B03C 3/47

(54) **ELECTROSTATIC PRECIPITATOR**

(30) Priority: 28.12.2021 JP 2021214990
(71) Applicant: CREATIVE TECHNOLOGY CORPORATION, Kawasaki-shi, Kanagawa 213-0034 (JP)
(72) Inventor: HASEGAWA, Takaaki, Kawasaki-shi, Kanagawa 213-0034 (JP); SHIMIZU, Yuji, Kawasaki-shi, Kanagawa 213-0034 (JP)
(74) Representative: Winter, Brandl - Partnerschaft mbB
(86) International application number: PCT/JP2022/048551
(87) International publication number: WO 2023/127946

(57) **Abstract**

An electrostatic precipitator 1 has a structure in which an ionization unit 3 and a dust collection unit 4 are assembled to a cover 2. The dust collection unit 4 is formed by a high-voltage electrode 5 and a dust collection board 6. An ionizer 30 of the ionization unit 3 is a direct current ionizer, and the high-voltage electrode 5 is covered with an insulator 51. The dust collection board 6 is formed by a base material 60 and a carbon material 61 covering the base material 60. Further, direct current voltages having the same polarity are applied from a power source 10 to the ionizer 30 and the high-voltage electrode 5, and a direct current voltage or a ground voltage having polarity opposite to that of the voltages applied to the ionizer 30 and the high-voltage electrode 5 is applied to the dust collection board 6.

## Description

### Technical Field

The present invention relates to an electrostatic precipitator that collects dust in air by using an electric field.

### Background Art

In recent years, air purifiers are not seasonal home appliances, but year-round home appliances, and have become widespread in general households and corporate offices. This is to cope with recent environmental problems such as coronavirus and PM 2.5. That is, this is because there is increasing interest in miniaturized air purifiers for use by individuals in environments such as personal spaces and office desks.

There are two types of air purifiers, that is, a filter-type air purifier and an electric-dust-collecting-type air purifier, but when these air purifiers are made smaller, the air purifiers have the following incompatibility.

First, in the filter-type air purifier, when the device is miniaturized, a static pressure of a fan decreases. Therefore, air cannot pass through an HEPA filter sufficiently, and an air purification capacity deteriorates. Further, in order to improve the air purification capacity even a little, a rotation speed of the fan is increased, which results in noise. For this reason, among filter-type air purifiers, some products generate as much noise as large air purifiers, making the products completely unsuitable for use in the personal spaces.

On the other hand, the electric-dust-collecting-type air purifier has a structure that allows the air purifier to exert a sufficient air purification capacity even when a static pressure of the fan is low, so there is no need to increase the rotation speed of the fan. Therefore, most of the electric-dust-collecting-type air purifiers are silent and do not generate any noise. However, in the electric-dust-collecting-type air purifier, it is necessary to bring a positive electrode and a negative electrode of the dust collecting structure close to each other in order to reduce the size. Therefore, discharge is generated, and ozone is easily generated. Therefore, this air purifier is also not suitable as a device for use in the personal spaces.

In order to cope with such a problem, an electrostatic precipitator described in Patent Literature 1 has been proposed.

The electrostatic precipitator has a structure in which an ionization unit and a dust collection unit are assembled to a case, and the dust collection unit includes a high-voltage electrode and a dust collection board. The ionization unit is a direct current ionizer, and the high-voltage electrode and the dust collection board are each covered with an insulator. Further, the electrostatic precipitator operates by applying direct current voltages having the same polarity from a power source to the ionizer and the high-voltage electrode, and applying a direct current voltage or a ground voltage having polarity opposite to that of the applied voltage to the dust collection board.

With this configuration, the electrostatic precipitator can efficiently collect dust without generating ozone and noise.

### Citation List

### Patent Literature

Patent Literature 1: WO2021/131519 pamphlet

### Summary of Invention

### Technical Problem

However, the electrostatic precipitator described above has the following problems.

Although the electrostatic precipitator can be miniaturized, the electrostatic precipitator does not have a structure completely adapted to a personal space.

That is, although this electrostatic precipitator can be made thinner, it is required to be of a certain size in order to make full use of an air purification capacity thereof. Therefore, the size thereof cannot be set to a size that allows a person to use on a desk. Therefore, an installation location is limited.

An air purifier has been required to have a function to cope with a sick building syndrome (formaldehyde), a chemical allergy, and the like. However, in the related art, air purifiers are mainly used for improving the cleanliness of a clean room in a factory and preventing a foreign matter from entering in the clean room. Therefore, although the air purifiers have a function of adsorbing particle-sized chemical substances or the like, the air purifiers do not have a function of adsorbing molecular-level chemical substances that are even smaller than particles, and thus have not been able to adsorb these substances.

The same applies to miniaturized air purifiers, and the above-mentioned electrostatic precipitators are no exception.

The present invention has been made in order to solve the above-described problems, and an object of the present invention is to provide an electrostatic precipitator that does not generate noise or ozone, that can not only be made thinner but also more compact and completely adapted to a personal space, and that can adsorb molecular-level substances such as chemical substances that are even smaller than particles.

### Solution to Problem

In order to solve the above problems, a first aspect of the present invention is an electrostatic precipitator including: an ionization unit configured to generate ions; and a dust collection unit configured to electrically collect dust to which the ions are attached, in which the ionization unit is an ionizer that generates the ions having the same polarity as an applied predetermined voltage by applying the voltage to an electrode needle to cause corona discharge, the dust collection unit includes a high-voltage electrode disposed at a rear stage of the ionization unit, having a plurality of gaps for passing the dust to which the ions are attached, and applied with a predetermined voltage, and a dust collection board disposed at a rear stage of the high-voltage electrode and applied with a voltage or a ground voltage having polarity opposite to polarity of the voltage applied to the high-voltage electrode to electrically adsorb the dust to which the ions are attached, the polarity of the voltage applied to the electrode needle of the ionization unit and the polarity of the voltage applied to the high-voltage electrode are set to the same polarity, and the high-voltage electrode of the dust collection unit is formed by a plurality of linear conductors arranged in parallel at predetermined intervals and each covered with an insulator, and the dust collection board of the dust collection unit is formed by a base material such as a semi-conductor or an insulator and a carbon material covering the base material.

With this configuration, when the predetermined voltages having the same polarity are applied to the ionization unit and the high-voltage electrode and the predetermined voltage or the ground voltage having the opposite polarity to the above voltages is applied to the dust collection board, the corona discharge occurs in the ionization unit, and a large amount of ions having the same polarity as the applied voltage are generated from the ionization unit. In this case, the voltage having the same polarity as the ions is applied to the high-voltage electrode disposed in the rear stage of the ionization unit, and thus, the large amount of ions are repelled by the high-voltage electrode, and movement thereof toward the dust collection board is prevented. That is, the high-voltage electrode having the same polarity as the ions are interposed between the ionization unit and the dust collection board, and prevents a direct electric field from being created between the ionization unit and the dust collection board. Accordingly, the large amount of ions do not go toward the dust collection board, but diffuse widely in front of the high-voltage electrode and adhere to dust in a wide range. As a result, the dust in the wide range is charged.

After passing through the gaps of the high-voltage electrode, the charged dust is drawn to a dust collection board side by a strong electric field generated between the high-voltage electrode and the dust collection board, and is electrically adsorbed onto the dust collection board. That is, the electrostatic precipitator according to the first aspect of the present invention has the capability to charge the dust in the wide range and efficiently collect a large amount of charged dust using the strong electric field.

By the way, if a distance between the ionization unit and the dust collection board is short, spark discharge may occur and ozone may be generated. Moreover, since energy to be provided for the generation of the ions is used for the spark discharge, dust collection efficiency may be lowered.

However, in the electrostatic precipitator according to the first aspect of the present invention, as described above, the high-voltage electrode is interposed between the ionization unit and the dust collection board, and the polarity of the voltage applied to the ionization unit and the polarity of the voltage applied to the high-voltage electrode are set to the same polarity, and thus, an electric field is not directly generated between the ionization unit and the dust collection board. Therefore, almost no spark discharge occurs. Moreover, the high-voltage electrode is covered with the insulator, and the dust collection board is formed by covering, with the carbon material, the base material having high volume resistivity such as a semi-conductor or an insulator, and thus almost no current flows, and as a result, the spark discharge can be reliably prevented from occurring. In other words, since the first aspect of the present invention is an electric-dust-collecting-type device, no noise is generated by a fan or the like. Further, not only can the generation of ozone be prevented, but also the distance between the ionization unit and the dust collection board can be shortened, and the thickness of the electrostatic precipitator can be reduced.

Further, in the first aspect of the present invention, the dust collection board of the dust collection unit is formed by the base material such as a semi-conductor or an insulator, and the carbon material covering the base material, and for example, by applying activated carbon as the carbon material, it is possible to adsorb not only particle-sized substances but also molecular-level substances such as chemical substances that are even smaller than particles.

Thus, since an adsorption capability of the dust collection board is very high, a desired dust collection capability can be obtained even when a small dust collection board is used. As a result, not only the thickness but also the entire electrostatic precipitator can be reduced in size. That is, in the first aspect of the present invention, it is possible to achieve miniaturization completely adapted to a personal space.

According to a second aspect of the present invention, in the electrostatic precipitator according to the first aspect, a structure of the base material of the dust collection board is a large surface area structure such as a corrugated honeycomb structure, a sponge structure, or a fiber structure.

With this configuration, a surface area of the dust collection board can be significantly increased. Therefore, even if a size of the dust collection board is set to be extremely small, a desired dust collection capability can be maintained, and thus the electrostatic precipitator can be further miniaturized accordingly.

According to a third aspect of the present invention, in the electrostatic precipitator according to the first aspect or the second aspect, an interval between the plurality of linear conductors forming the high-voltage electrode is set within a range of 40 mm to 80 mm, a distance between the high-voltage electrode formed by the plurality of linear conductors and the dust collection board is set within a range of 45 mm to 100 mm, and a distance from the electrode needle of the ionization unit to the high-voltage electrode is set to 0 mm or more.

With this configuration, a small electrostatic precipitator can be used freely in a personal space.

According to a fourth aspect of the present invention, in the electrostatic precipitator according to any one of the first to third aspects, the ionizer is a direct current ionizer that generates ions by applying a direct current voltage of 3 kV or more, and the voltage applied to the dust collection board is a direct current voltage or a ground voltage having polarity opposite to that of the high-voltage electrode.

With this configuration, stable corona discharge performed by the ionizer can be maintained.

According to a fifth aspect of the present invention, in the electrostatic precipitator according to any one of the first to fourth aspects, an ionizer having an electrode needle of the same polarity as the electrode needle of the ionization unit is additionally provided above and outside the dust collection unit.

With this configuration, the ions are generated not only from the electrode needle of the ionization unit, but also from the electrode needle of the ionizer, which is additionally provided above and outside the dust collection unit, and thus the ions can be efficiently diffused over a wider range, and dust collection performance of the present invention can be further improved.

According to a sixth aspect of the present invention, in the electrostatic precipitator according to any one of the first to fifth aspects, the ionization unit is disposed at a front stage inside an insulating cover of which front and rear sides are opened, the dust collection unit is assembled from a middle stage to a rear stage inside the cover, and a front cover member made of an insulating resin and having a plurality of openings is provided between the ionization unit and the high-voltage electrode of the dust collection unit and at a position away from the electrode needle of the ionization unit.

With this configuration, by attaching components of the electrostatic precipitator inside the cover, the internal electrostatic precipitator can be protected, and durability can be enhanced. However, only covering an area around the electrostatic precipitator will significantly reduce the dust collection performance. However, in the sixth aspect of the present invention, since the front cover member is provided between the ionization unit and the high-voltage electrode of the dust collection unit and at the position away from the electrode needle of the ionization unit, it is possible to prevent a decrease in dust collection performance.

According to a seventh aspect of the present invention, in the electrostatic precipitator according to the second aspect, the dust collection unit has any one of structures in which a plurality of the dust collection boards are stackedly provided in a front-rear direction, a structure in which the dust collection board is bendedly provided in the front-rear direction, and in which a thicker dust collection board is provided, at the rear stage of the high-voltage electrode.

With this configuration, a thickness of the dust collection board can be increased several times, and the surface area of the dust collection board can be increased accordingly. As a result, the dust collection board can be miniaturized while maintaining the desired dust collection capability, and the electrostatic precipitator can be further miniaturized.

### Advantageous Effects of Invention

As described above in detail, according to an electrostatic precipitator of the present invention, there is no occurrence of noise and ozone. Further, it is possible not only to reduce thickness of the device, but also to reduce a size to completely fit into a personal space. There is an effect of being able to adsorb molecular-level substances such as chemical substances that are even smaller than particles. In particular, according to the second and seventh aspects, further miniaturization can be achieved.

According to the fifth aspect, it is possible to further improve dust collection performance.

### Brief Description of Drawings

[Figure 1] Figure 1 is a perspective view showing an electrostatic precipitator according to a first embodiment of the present invention.
[Figure 2] Figure 2 is a cross-sectional view taken along a line A-A in Figure 1.
[Figure 3] Figure 3 is an exploded perspective view of the electrostatic precipitator in Figure 1 showing a partially broken component.
[Figure 4] Figure 4 is a cross-sectional view showing an ion generation state by an ionization unit.
[Figure 5] Figure 5 is a cross-sectional view showing from above a dust collection state of charged dust.
[Figure 6] Figure 6 is an exploded cross-sectional view illustrating an electrostatic precipitator according to a second embodiment of the present invention.
[Figure 7] Figure 7 is a perspective view showing a base material of a dust collection board applied to an electrostatic precipitator according to a third embodiment of the present invention.
[Figure 8] Figure 8 shows schematic views showing an example of a method for using the dust collection board, in which (a) shows a state in which two dust collection boards are stacked, and (b) shows a state in which one dust collection board is bent.
[Figure 9] Figure 9 is a perspective view showing an electrostatic precipitator according to a fourth embodiment of the present invention.
[Figure 10] Figure 10 is a perspective view showing an electrostatic precipitator according to a fifth embodiment of the present invention.
[Figure 11] Figure 11 is a schematic cross-sectional view illustrating a main part of the fifth embodiment.

### Description of Embodiments

Hereinafter, preferred embodiments of the present invention will be described with reference to the drawings.

### (First Embodiment)

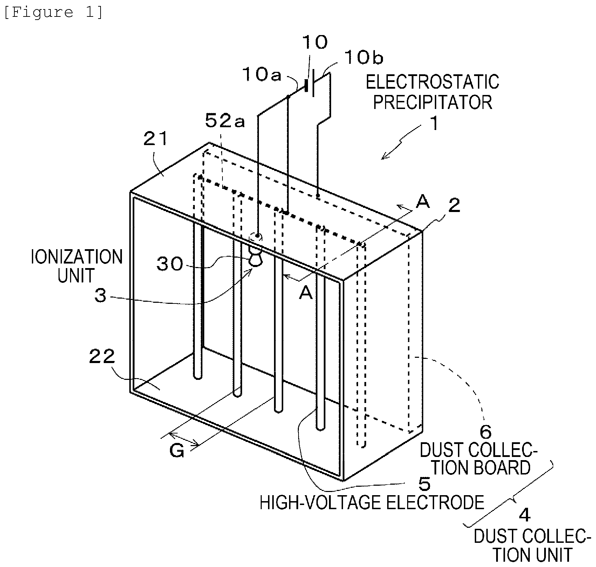

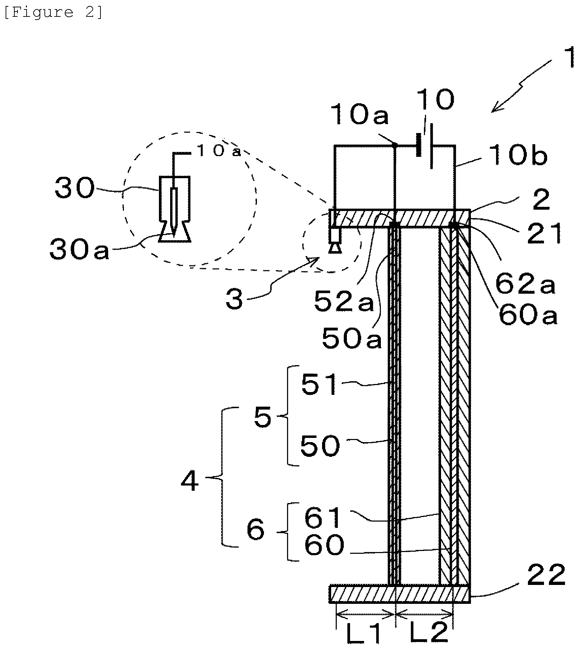

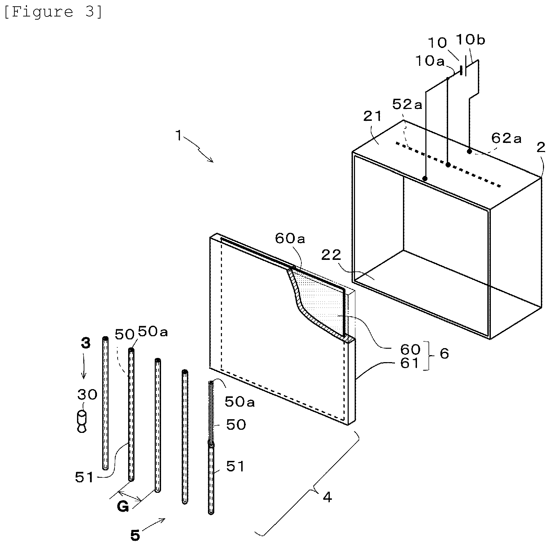

Figure 1 is a perspective view showing an electrostatic precipitator according to a first embodiment of the present invention, Figure 2 is a cross-sectional view taken along a line A-A in Figure 1, and Figure 3 is an exploded perspective view of the electrostatic precipitator in Figure 1 showing a partially broken component.

As shown in Figure 1, an electrostatic precipitator 1 according to this embodiment has a structure in which an ionization unit 3 and a dust collection unit 4 are incorporated in a cover 2.

The cover 2 is a quadrangular frame body made of an insulating resin that is open at front (front side in Figure 1) and rear (rear side in Figure 1), the ionization unit 3 is assembled at a front stage inside the cover 2, and the dust collection unit 4 is assembled from a middle stage inside the cover 2 to a rear stage inside the cover 2.

The ionization unit 3 is a portion that generates ions, and includes an ionizer 30 and a power source 10.

The ionizer 30 is attached to a center of a front end of a lower surface of an upper frame 21 of the cover 2. The ionizer 30 is a direct current ionizer and includes an electrode needle 30a therein as shown in Figure 2. A tip of the electrode needle 30a faces downward, and a rear end thereof is connected to a negative electrode 10a of the power source 10 that generates a direct current voltage.

That is, a negative direct current voltage from the power source 10 is applied to the electrode needle 30a of the ionizer 30. Accordingly, corona discharge can be generated at the tip of the electrode needle 30a, and air existing around the electrode needle 30a can be electrically decomposed to generate negative ions.

In order to maintain stable corona discharge and generate ions, the voltage applied to the electrode needle 30a is usually required to be in a range of 3 kV to 7 kV. Therefore, in this embodiment, a direct current power source in a range of 3 kV to 7 kV is used as the power source 10.

Polarity of the voltage applied to the electrode needle 30a is optional, but in this embodiment, the setting is such that a negative direct current voltage is applied.

That is, a direction of the electrode needle 30a and the voltage of the power source 10 are set such that the negative ions diffuse in front of the dust collection unit 4 in parallel with a surface of the dust collection unit 4.

The dust collection unit 4 is a unit that electrically collects dust to which ions are attached, and includes high-voltage electrodes 5 in a front stage and a dust collection board 6 in a rear stage.

The high-voltage electrodes 5 of the dust collection unit 4 are a plurality of linear conductors 50 arranged in the rear stage of the ionization unit 3, and are connected to the power source 10.

As shown in Figure 3, the plurality of linear conductors 50 are arranged side by side and parallel at predetermined intervals in an upright state.

This interval, that is, each interval G of the plurality of linear conductors 50 arranged side by side is an interval for passing the dust to which the ions are attached, and is set in a range of 40 mm to 80 mm, and more preferably set in a range of 60 mm to 80 mm.

Each of the plurality of linear conductors 50 is covered with an insulator 51.

It is desirable that such a linear conductor 50 is as thin as possible and has performance of being capable of withstanding a high voltage.

For example, the linear conductor 50 is preferably made of copper, nickel, or an alloy thereof, and the insulator 51 is preferably silicon or polyethylene.

An upper end 50a of such a linear conductor 50 is connected to a band-shaped conductor 52a provided on the lower surface of the upper frame 21 of the cover 2, and the band-shaped conductor 52a is connected to the negative electrode 10a of the power source 10.

Accordingly, the negative direct current voltage from the power source 10 is applied to the plurality of linear conductors 50.

That is, as shown in Figure 2, in the electrostatic precipitator 1 of the embodiment, both direct current voltages applied to the electrode needle 30a of the ionizer 30 and the plurality of linear conductors 50 are set to the same voltage value with the same polarity.

Accordingly, by setting the direct current voltages applied to the electrode needle 30a of the ionizer 30 and the plurality of linear conductors 50 to have the same polarity, the ions generated by the ionizer 30 can be prevented from being directly adsorbed on the dust collection board 6 by the plurality of linear conductors 50 constituting the high-voltage electrodes 5, and the ions can be diffused by a repulsive action of the same polarity.

In the present embodiment, the direct current voltages applied to the electrode needle 30a of the ionizer 30 and the plurality of linear conductors 50 are set to the same voltage value, and it is of course possible to set different voltage values when the polarities are the same.

As shown in Figure 3, the dust collection board 6 of the dust collection unit 4 is a flat plate-shaped conductor disposed in a rear stage of the high-voltage electrodes 5, and is connected to the power source 10.

The dust collection board 6 is disposed to be rearward by a predetermined distance from the high-voltage electrodes 5 in a state of standing perpendicular to a dust collection direction (right direction in Figure 2).

As shown in Figure 2, a distance L1 from the electrode needle 30a of the ionizer 30 to the high-voltage electrodes 5 is set to 0 mm or more. Preferably, the distance L1 is set to 10 mm or more. A distance L2 from the high-voltage electrodes 5 to the dust collection board 6 is set in a range of 45 mm to 100 mm. Preferably, the distance L2 is set in a range of 55 mm to 90 mm.

As shown in Figure 3, such a dust collection board 6 is formed by a base material 60 and a carbon material 61 covering the base material 60.

A semi-conductor, an insulator, or the like can be applied as the base material 60, and various materials such as activated carbon can be applied as the carbon material. In the embodiment, a 5-mm-thick urethane foam sponge which is a porous body of an insulator is used as the base material 60, and activated carbon is used as the carbon material. When the number of pores in the urethane foam sponge exceeds 30 ppi (pores per inch: number of pores per inch of sponge), a pressure loss increases and air cannot pass through, making it difficult to draw charged particles into the dust collection board, so even if an area increases, the sponge is not effective, so it is preferable that the number of pores is 30 ppi or less. Further, it is preferable to attach the carbon material 61 to the base material 60 so that volume resistivity of the dust collection board 6 is 10⁵ Ω·cm to 10¹⁰ Ω·cm. Accordingly, although almost no current flows through the dust collection board 6, a necessary voltage can be applied to the dust collection board 6, so that an electric shock and spark discharge can be prevented.

As shown in Figure 2, an upper end 60a of the base material 60 coated with the carbon material 61 in this manner is connected to a terminal 62a provided at the rear of the lower surface of the upper frame 21 of the cover 2, and the terminal 62a is connected to a positive electrode 10b of the power source 10.

Accordingly, a positive direct current voltage from the power source 10 is applied to the dust collection board 6.

That is, in the electrostatic precipitator 1 according to this embodiment, a direct current voltage or a ground voltage having polarity opposite to the polarity of the voltage applied to the high-voltage electrodes 5 is set to be applied to the dust collection board 6 formed by the base material 60 and the carbon material 61. This voltage value is a voltage value in a range of 0 V to 5 kV. Further, since a risk of discharge and an electric shock can be further reduced, a voltage value in a range of 0 KV to 3 KV is more preferable.

As described above, when the voltage or the ground voltage having the polarity opposite to that of the high-voltage electrodes 5 is applied to the dust collection board 6, a strong electric field is generated between the high-voltage electrodes 5 and the dust collection board 6, and charged dust that has passed through the intervals G between the high-voltage electrodes 5 can be quickly adsorbed onto the dust collection board 6 with a strong force.

Next, an operation and effects of the electrostatic precipitator 1 according to this embodiment will be described.

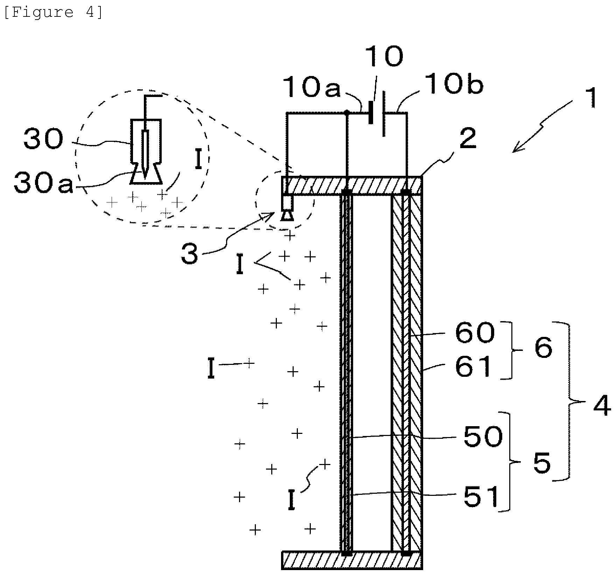

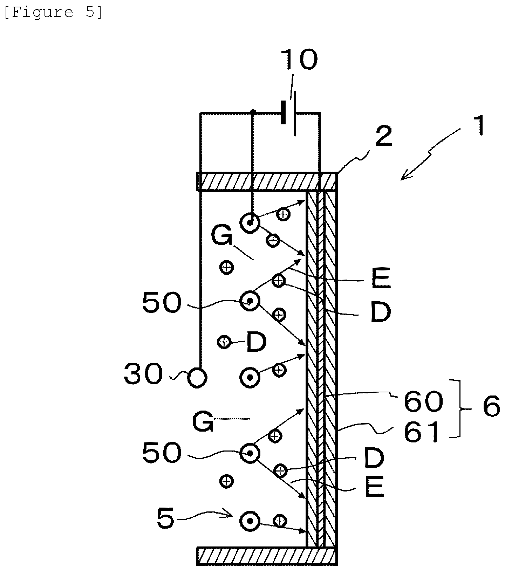

Figure 4 is a cross-sectional view showing an ion generation state by the ionization unit 3, and Figure 5 is a cross-sectional view showing from above a dust collection state of the charged dust.

In Figure 2, the negative direct current voltage of the power source 10 is applied to the electrode needle 30a of the ionizer 30 and the linear conductors 50 of the high-voltage electrodes 5, and the positive direct current voltage is applied to the dust collection board 6.

Thus, the negative direct current voltage is applied to the electrode needle 30a of the ionizer 30, and the corona discharge is generated at the tip portion of the electrode needle 30a. As a result, as shown in Figure 4, a large amount of negative ions I diffuse around the tip portion of the electrode needle 30a.

In this case, the ions I are attempting to be drawn into a dust collection board 6 side, the negative direct current voltage having the same polarity as the ions I is applied to the linear conductors 50 of the high-voltage electrodes 5, and thus, movement of the ions I to the dust collection board 6 side is prevented by the linear conductors 50 having the same polarity.

That is, since the linear conductors 50 to which the voltage having the same polarity as the ions I is applied are interposed between the ionizer 30 and the dust collection board 6, no direct electric field is formed between the electrode needle 30a of the ionizer 30 and the dust collection board 6.

Therefore, a large amount of the ions I are widely diffused in front of the high-voltage electrodes 5 without being drawn by the dust collection board 6, and adhere to dust existing in a wide space in front of the high-voltage electrodes 5. That is, presence of the high-voltage electrodes 5 to which a voltage having the same polarity as that of the ionizer 30 is applied causes the dust in a wide range to be charged.

Further, as shown in Figure 5, a strong electric field E directed from the high-voltage electrodes 5 toward the dust collection board 6 is generated between the high-voltage electrodes 5 and the dust collection board 6, and thus, when negatively charged dust D passes through the interval G between the high-voltage electrodes 5, the charged dust D is rapidly drawn toward the dust collection board 6 with a strong force and is electrically adsorbed onto the dust collection board 6.

That is, according to the electrostatic precipitator 1 of the embodiment, a large amount of dust is charged in a wide range, and the charged dust is strongly and quickly collected by a strong electric field between the high-voltage electrodes 5 and the dust collection board 6.

In the electrostatic precipitator of this embodiment, as described above, the distance L2 from the high-voltage electrode 5 to the dust collection board 6 is allowed to be set in the range of 45 mm to 100 mm, the interval G between the high-voltage electrodes 5 is allowed to be set in the range of 40 mm to 80 mm, and the distance L1 from the electrode needle 30a of the ionizer 30 to the high-voltage electrode 5 is allowed to be set to 0 mm or more. Therefore, the electrostatic precipitator is made smaller while maintaining a desired dust collection capability.

Here, the inventors have conducted a comparison experiment between the dust collection capability and miniaturization of the dust collection board provided in the electrostatic precipitator according to this embodiment and a dust collection capability and miniaturization of the dust collection board provided in the electrostatic precipitator in the related art.

The electrostatic precipitator in the related art includes a dust collection board different from the electrostatic precipitator according to this embodiment, and has a structure in which the dust collection board is a polyvinyl chloride (PVC) board and the conductor is covered with an insulator.

The comparison experiment with the electrostatic precipitator in the related art was performed in an acrylic box having a size of 1.4 m X 1.4 m X 1.4 m.

The electrostatic precipitator according to this embodiment achieves an attenuation factor of approximately 130% compared to the electrostatic precipitator in the related art including a dust collection board having the same size. Accordingly, the inventors have found that the electrostatic precipitator according to this embodiment has a higher dust collection capability than the electrostatic precipitator in the related art.

A size of the dust collection board in the electrostatic precipitator according to this embodiment is a small A6 size, but in order for the dust collection board of the electrostatic precipitator in the related art to have the same level of dust collection capability as this small dust collection board, the size is required to be made into a large A4 size. In other words, in order to obtain the same level of dust collection capability as the electrostatic precipitator according to this embodiment by the electrostatic precipitator in the related art, it is necessary to increase the size of the dust collection board four times.

By the way, if a distance between the ionizer 30 of the ionization unit 3 and the dust collection board 6 is short, the spark discharge may occur and ozone may be generated from the ionizer 30 toward the dust collection board 6.

However, in the electrostatic precipitator 1 according to this embodiment, the plurality of linear conductors 50, which are the high-voltage electrodes 5, are interposed between the ionizer 30 and the dust collection board 6, and moreover, the polarity of the direct current voltage applied to the ionizer 30 and the polarity of the direct current voltage applied to the linear conductor 50 are set to the same polarity, and thus, an electric field is not directly generated between the ionizer 30 and the dust collection board 6. Therefore, almost no spark discharge occurs, so that no ozone is generated.

In order to confirm such a point, the inventors drove the electrostatic precipitator 1 according to this embodiment by applying a direct current voltage of 7 KV to the ionizer 30 and the linear conductor 50 and applying the ground voltage to the dust collection board 6 under conditions of a room temperature of 23°C and a dry air flow rate of 20 L/min. For the measurement, an environmental ozonometer Model 1150 manufactured by Dylec Co., LTD. was used, and samples were collected at 1.5 L/min, and sampling was performed at 12 second intervals. For an ozone concentration, an average value for 10 minutes from 5 minutes after a start of the measurement to 15 minutes was used.

Thus, it was found that in the electrostatic precipitator according to this embodiment, a difference in ozone concentration from Blank is 0.0025 ppm or less, and an amount of generated ozone is extremely small.

By the way, in the air, there is not only particle-sized dust such as chemical substances, but also molecular-level chemical dust that is even smaller than particles. Such extremely small dust cannot be collected with a general electric-dust-collecting-type air purifier.

However, in the electrostatic precipitator 1 according to this embodiment, since the dust collection board 6 of the dust collection unit 4 is formed by the base material 60 which is the insulator and the carbon material 61 which is the activated carbon, not only the particle-sized dust but also the molecular-level dust such as chemical substances even smaller than the particles can be adsorbed by an adsorption capability of the carbon material 61.

Thus, in the electrostatic precipitator 1 according to this embodiment, the adsorption capability of the dust collection board 6 is very high. Therefore, even if a small dust collection board 6 is used, a desired dust collection capability can be obtained. That is, by making the dust collection board 6 smaller than usual, not only the thickness but also the entire electrostatic precipitator 1 can be made small, and thus it is possible to provide the electrostatic precipitator 1 completely adapted to a personal space such as being easily provided on a table.

Further, activated carbon also has a high capability to adsorb ozone. Therefore, even if an unexpected situation occurs such as the ionizer 30 approaching a user due to damage and the like, the dust collection board 6 absorbs generated ozone and protects the user.

The electrostatic precipitator 1 according to this embodiment is an electric-dust-collecting-type device, and does not include a fan or the like that generates noise. However, it is necessary to check whether the noise is generated due to miniaturization. Therefore, the inventors set the size of the electrostatic precipitator 1 to one-eighth of that of an electric-dust-collecting-type air purifier in the related art, operated the electrostatic precipitator 1, and measured a volume thereof, which was 16 dB. The volume was less than one-tenth of a volume of 40 dB or more generated by a HEPA-filter-type air purifier having a similar size, and dust collection performance was 2 times or more.

### (Second Embodiment)

Next, a second embodiment will be described.

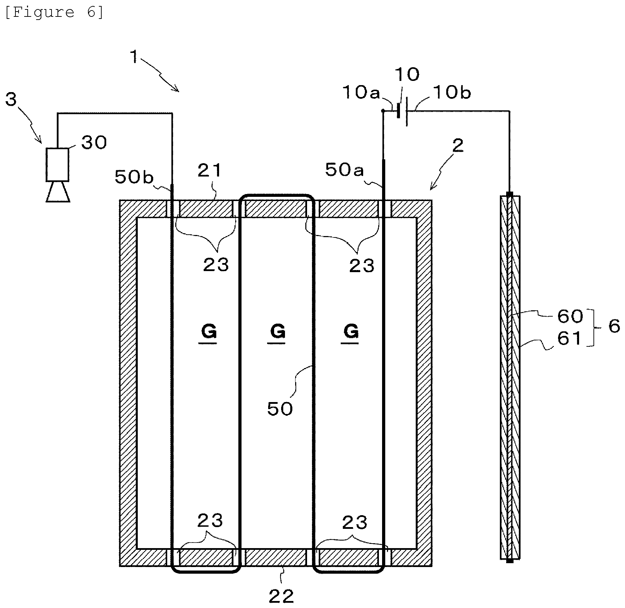

Figure 6 is an exploded cross-sectional view illustrating an electrostatic precipitator according to a second embodiment of the present invention.

In the electrostatic precipitator 1 according to the present embodiment, an electrical connection structure of a high-voltage electrode and an electrical connection structure of an ionizer are different from those of the above-described first embodiment.

In the first embodiment described above, the plurality of linear conductors 50 are connected in parallel to the negative electrode 10a of the power source 10 through the band-shaped conductor 52a (see Figure 2). However, in this embodiment, as shown in Figure 6, a configuration in which one linear conductor 50 is connected to the negative electrode 10a of the power source 10 is applied as the high-voltage electrode.

Specifically, a plurality of holes 23 are provided in the upper frame 21 and a lower frame 22 of the cover 2, and one linear conductor 50 covered with the insulator 51 is passed through the holes 23 in a meandering manner like a shoelace. Then, by connecting a base end 50a of the linear conductor 50 to the negative electrode 10a of the power source 10, the high-voltage electrode having the same function as the high-voltage electrode of the above-described first embodiment is configured.

In the above-described first embodiment, power is supplied to the ionizer 30 of the ionization unit 3 from the negative electrode 10a of the power source 10 by an electric wire. On the other hand, in this embodiment, by connecting an end 50b of the linear conductor 50 to the ionizer 30, the linear conductor 50 is also used as the electric wire for supplying the power to the ionizer 30.

An electrical structure of the electrostatic precipitator is simplified by using such an electrical connection structure.

Since other configurations, functions, and effects are the same as those in the first embodiment, descriptions thereof will be omitted.

### (Third Embodiment)

Next, a third embodiment will be described.

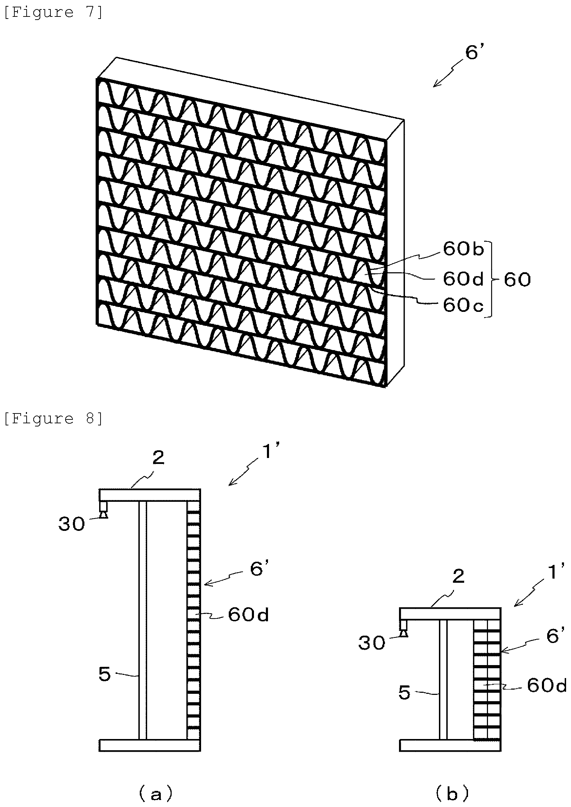

Figure 7 is a perspective view showing a base material of a dust collection board applied to an electrostatic precipitator according to a third embodiment of the present invention.

The electrostatic precipitator according to this embodiment is different from the first and second embodiments in that the structure of the base material 60 of a dust collection board 6' has a large surface area structure.

Specifically, paper is used as a material of the base material, and the base material 60 having a corrugated honeycomb structure and a large surface area is formed using this paper. For example, as shown in Figure 7, the base material 60 having a corrugated honeycomb structure having a large number of cells 60d is formed by laminating wave-shaped corrugated papers 60b with a liner paper 60c interposed therebetween.

Further, the carbon material 61 (see Figure 3) is adhered to a surface of this base material 60 to form the dust collection board 6' having a corrugated honeycomb structure.

By making good use of this dust collection board 6', the electrostatic precipitator 1 can be further miniaturized.

Figure 8 is a schematic view showing an example of a method for using the dust collection board 6' shown in Figure 7, (a) of Figure 8 shows a state in which one dust collection board 6' is used, and (b) of Figure 8 shows a state in which one dust collection board 6' is bent.

Even when an external dimension of the dust collection board 6' in a front view (left-right direction in Figure 8) is the same as an external dimension of the above dust collection board 6 in a front view, the dust collection board 6' includes a large number of cells 60d, so that a surface area of the dust collection board 6' increases and a dust collection capability can be enhanced.

As shown in (b) of Figure 8, by disposing one dust collection board 6' bent in a front-rear direction and placed in a rear stage of the high-voltage electrode 5, a height dimension (length in an up-down direction in Figure 8) of the electrostatic precipitator 1 can be reduced to half.

Further, even when two dust collection boards 6' each having a half height dimension are stacked and used in place of bending the one dust collection board 6' shown in Figure 7, the electrostatic precipitator 1 can be downsized to one half.

The electrostatic precipitator 1 can also be downsized to one half by halving the height dimension of one dust collection board 6' shown in Figure 7 and doubling a thickness dimension (length in the left-right direction in Figure 8) thereof.

Since other configurations, functions, and effects are the same as those in the first and second embodiments, descriptions thereof will be omitted.

### (Fourth Embodiment)

Next, a fourth embodiment will be described.

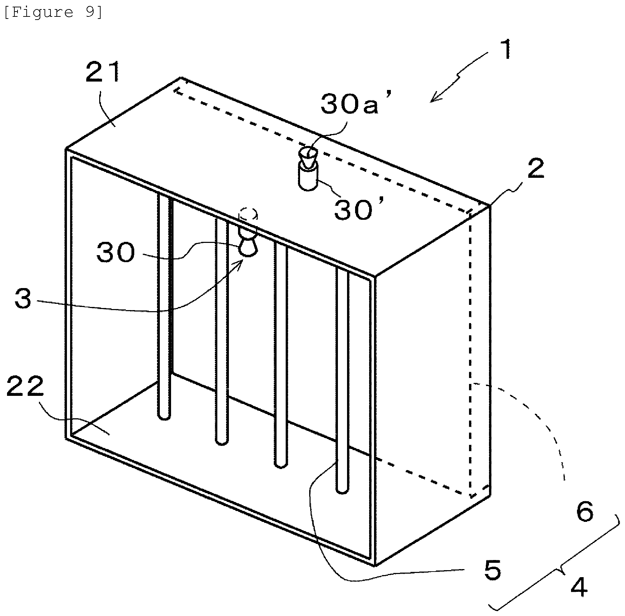

Figure 9 is a perspective view showing an electrostatic precipitator according to the fourth embodiment of the present invention.

The electrostatic precipitator 1 according to this embodiment is different from the first to third embodiments in that an ionizer 30' is additionally provided.

That is, as shown in Figure 9, the ionizer 30' separate from the ionizer 30 of the ionization unit 3 is provided above and outside the dust collection unit 4.

Specifically, the ionizer 30' is attached onto the upper frame 21 of the cover 2 such that an electrode needle 30a' having the same polarity as the electrode needle 30a of the ionization unit 3 faced upward. Further, the electrode needle 30a' of the ionizer 30' is connected to the negative electrode 10a (see Figure 1) of the power source 10.

With this configuration, when the power source 10 is turned on, the ionizer 30' operates to generate the ions I.

Therefore, according to the electrostatic precipitator 1 of this embodiment, since the ions I are generated not only from the ionizer 30 but also from the ionizer 30', the ions I can be efficiently diffused over a wider area.

Since other configurations, functions, and effects are the same as those in the first to third embodiments, descriptions thereof will be omitted.

### (Fifth Embodiment)

Next, a fifth embodiment will be described.

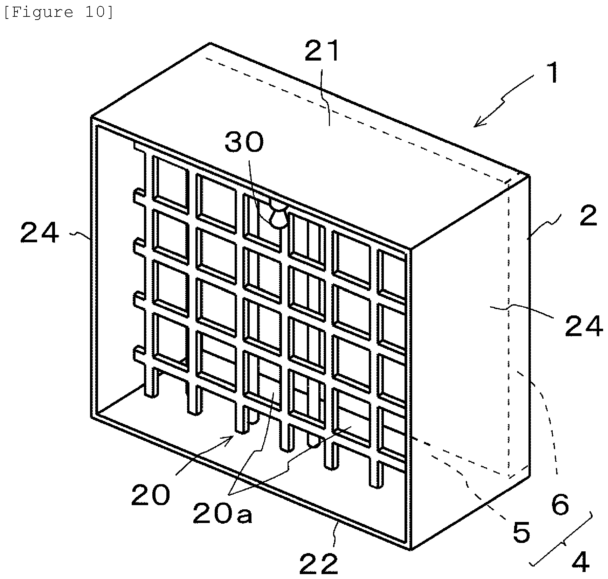

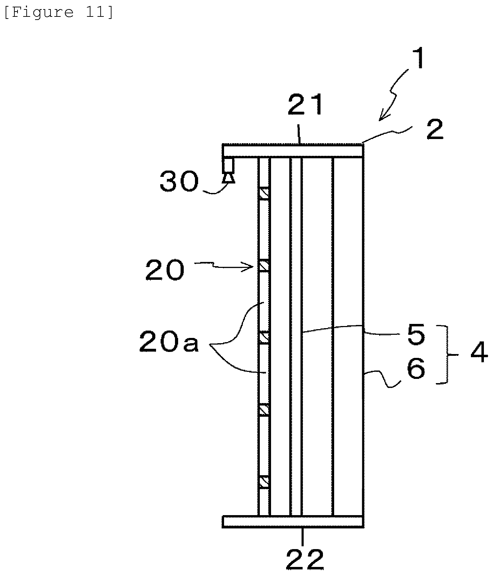

Figure 10 is a perspective view showing a main part of an electrostatic precipitator according to the fifth embodiment of the present invention, and Figure 11 is a schematic cross-sectional view illustrating the main part of the embodiment.

The electrostatic precipitator 1 according to this embodiment is different from the first to fourth embodiments in that a front cover member 20 is provided.

That is, in the first to fourth embodiments, the ionization unit 3 is disposed at a front stage inside the insulating cover 2 of which front and rear sides are opened. Further, the dust collection unit 4 is assembled from a middle stage to a rear stage inside the cover 2. Accordingly, durability of the electrostatic precipitator 1 is enhanced, and the electrostatic precipitator 1 is protected from damage.

However, the cover 2 of the electrostatic precipitator 1 is merely a quadrangular frame body, and cannot be said to be sufficient as protection. The high-voltage electrodes 5 of the dust collection unit 4 are completely exposed from a front opening of the cover 2, and may be damaged by contact with an external object.

Therefore, in the fifth embodiment, the front cover member 20 is provided to reinforce the cover 2 and protect the high-voltage electrodes 5.

Specifically, as shown in Figure 10, the front cover member 20 is a lattice-shaped member having a large number of openings 20a, and like the cover 2, is made of an insulating resin.

The front cover member 20 is disposed in front of the high-voltage electrodes 5, and has an upper end portion fixed to the upper frame 21 of the cover 2, a lower end portion fixed to the lower frame 22, and both side portions respectively fixed to both side frames 24, 24.

As shown in Figure 11, this front cover member 20 is interposed between the ionizer 30 of the ionization unit 3 and the high-voltage electrodes 5, and when a position of the front cover member 20 is too close to the electrode needle 30a of the ionizer 30, the front cover member 20 may obstruct corona discharge at the electrode needle 30a, and an amount of generated ions may decrease.

In this embodiment, the cover 2 is set to a quadrangular frame body, but a shape thereof is not limited to this, and is freely set. Similarly to the front cover member 20, an opening may be provided in the cover 2.

Further, the front cover member 20 is formed of the lattice-shaped member, but is not limited thereto. Any member may be used as long as the member has an opening that is small enough to prevent human hands from entering.

Since other configurations, functions, and effects are the same as those in the first to fourth embodiments, descriptions thereof will be omitted.

The present invention is not limited to the above-described embodiments, and various modifications and changes can be made within the scope of the gist of the invention.

For example, in the above embodiment, the high-voltage electrodes are formed of the plurality of parallel linear conductors 50 coated with the insulators 51 as shown in Figure 3, but the high-voltage electrodes are not limited thereto.

In the above embodiments, in order to facilitate the understanding of the corona discharge, the ionizer 30 having one electrode needle 30a inside is exemplified as the ionizer of the ionization unit 3, but the ionizer applicable to the electrostatic precipitator is not limited thereto. For example, a "carbon brush ionizer" in which electrode needles made of carbon conductive fibers are bundled in a brush shape can also be applied as the ionizer for the electrostatic precipitator.

Further, the cover 2 according to the above embodiment has a configuration including the upper frame 21, the lower frame 22, and the two side frames 24 connecting the upper frame 21 and the lower frame 22, but the shape of the cover can be changed as appropriate. For example, a cover including no two side frames 24 may be adopted. Further, in the first, second, fourth, and fifth embodiments, the configurations including five high-voltage electrodes 5 are shown, but the number of high-voltage electrodes can be changed as appropriate.

1 electrostatic precipitator; 2 cover; 3 ionization unit; 4 dust collection unit; 5 high-voltage electrode; 6,6' dust collection board; 60a upper end; 60b corrugated paper; 60c liner paper; 60d cell; 10 power source; 10a negative electrode; 10b positive electrode; 20 front cover member; 21 upper frame; 22 lower frame; 23 hole; 24 side frame; 30,30' ionizer; 30a,30a' electrode needle; 30a,30a' linear conductor; 50 upper end (base end); 50b end; 51,60 base material; 61 carbon material; 52a band-shaped conductor; 62a terminal; E electric field; G interval; I ion; D charged dust

## Claims

1. An electrostatic precipitator comprising:
an ionization unit configured to generate ions; and
a dust collection unit configured to electrically collect dust to which the ions are attached,
wherein the ionization unit includes an ionizer that generates the ions having the same polarity as an applied predetermined voltage by applying the voltage to an electrode needle to cause corona discharge,
wherein the dust collection unit includes:
a high-voltage electrode disposed at a rear stage of the ionization unit, having a plurality of gaps for passing the dust to which the ions are attached, and applied with a predetermined voltage; and
a dust collection board disposed at a rear stage of the high-voltage electrode and applied with a voltage or a ground voltage having polarity opposite to polarity of the voltage applied to the high-voltage electrode to electrically adsorb the dust to which the ions are attached,
wherein the polarity of the voltage applied to the electrode needle of the ionization unit and the polarity of the voltage applied to the high-voltage electrode are set to the same polarity, and
wherein the high-voltage electrode of the dust collection unit is formed by a plurality of linear conductors arranged in parallel at a predetermined interval and each covered with an insulator,
wherein the dust collection board of the dust collection unit is formed by a base material such as a semi-conductor or an insulator and a carbon material covering the base material, and
wherein an ionizer having an electrode needle of the same polarity as the electrode needle of the ionization unit is additionally provided above and outside the dust collection unit.

2. An electrostatic precipitator according to Claim 1,
wherein a structure of the base material of the dust collection board is a large surface area structure such as a corrugated honeycomb structure, a sponge structure, or a fiber structure.

3. An electrostatic precipitator according to Claim 1 or 2, wherein an interval between the plurality of linear conductors forming the high-voltage electrode is set within a range of 40 mm to 80 mm,
wherein a distance between the high-voltage electrode formed by the plurality of linear conductors and the dust collection board is set within a range of 45 mm to 100 mm, and
wherein a distance from the electrode needle of the ionization unit to the high-voltage electrode is set to 0 mm or more.

4. An electrostatic precipitator according to any one of Claim 1 to 3,
wherein the ionizer is a direct current ionizer that generates ions by applying a direct current voltage of 3 kV or more, and
wherein the voltage applied to the dust collection board is a direct current voltage or a ground voltage having polarity opposite to that of the high-voltage electrode.

5. An electrostatic precipitator according to any one of Claim 1 to 4,
wherein the ionization unit is disposed at a front stage inside an insulating cover of which front and rear sides are opened, and the dust collection unit is assembled from a middle stage to a rear stage inside the cover, and wherein a front cover member made of an insulating resin and having a plurality of openings is provided between the ionization unit and the high-voltage electrode of the dust collection unit and at a position away from the electrode needle of the ionization unit.

6. An electrostatic precipitator according to Claim 2, wherein the dust collection unit has any one of structures in which a plurality of the dust collection boards are stackedly provided in a front-rear direction, in which the dust collection board is bendedly provided in the front-rear direction, and in which a thicker dust collection board is provided, at the rear stage of the high-voltage electrode.
